(19) Europäisches Patentamt
European Patent Office
Office européen des brevets

(11)  EP 2 503 420 A1

(12)  **EUROPEAN PATENT APPLICATION**

(43) Date of publication:
26.09.2012  Bulletin 2012/39

(51) Int Cl.:
*G05B 19/41* (2006.01)        *G05B 19/418* (2006.01)
*G01R 31/308* (2006.01)

(21) Application number: 11275045.0

(22) Date of filing: 23.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: MBDA UK LIMITED
Stevenage,
Hertfordshire SG1 2DA (GB)

(72) Inventor: **The designation of the inventor has not yet been filed**

(74) Representative: BAE SYSTEMS plc
Group IP Department
Farnborough Aerospace Centre
Farnborough
Hampshire GU14 6YU (GB)

(54)  **Workpiece positioning method and apparatus**

(57)  A method of relatively positioning a workpiece and a reference axis comprising effecting relative displacements of the workpiece and the reference axis along orthogonal axes so that an intersection of the reference axis with the workpiece is moved at substantially constant speed along a curvilinear path.

The method is particularly applicable to SEE sensitivity mapping of a microchip memory using a pulsed laser, relative to the axis of which the chip is moved in a spiral path.

Fig. 2

**Description**

This invention relates to a method and apparatus for relatively positioning a workpiece and a reference axis. It is particularly but not exclusively applicable to the accurate presentation of an integrated circuit (microchip) to a pulsed laser, for example for performing single event effect (SEE) sensitivity mapping.

Conventional stepper-motor positioning for laser SEE scanning imposes restrictions on the trajectory and reproducibility of the scanning paths. In particular the scanning pattern generates unwanted accelerations and decelerations, which tend to induce vibrations in the structure in which the microchip is mounted.

The present invention, at least is its preferred embodiments, seeks to overcome or at least reduce this problem, but is of general application to the accurate relative positioning of a workpiece and an operative element required to interact with it. The operative element may be one which performs an operation on the workpiece, or tests or inspects it, or is assembled with it.

In one aspect the invention provides a method of relatively positioning a workpiece and a reference axis comprising effecting relative displacements of the workpiece and the reference axis along orthogonal axes so that an intersection of the reference axis with the workpiece is moved at substantially constant speed along a curvilinear path.

The displacements along the axes preferably are effectively continuous.

The curvilinear path may be a spiral.

Preferably the change in radius per revolution between successive turns of the spiral is constant. This results in the trajectory length per area in the x-y plane being constant, thereby facilitating uniform scanning coverage. Constant change in radius can be achieved when the displacements along the orthogonal axes are defined by

$$x = A\sqrt{t}Cos(\omega\sqrt{t}) \text{ and } y = A\sqrt{t}\sin(\omega\sqrt{t})$$

where t is time and A and w are constants.

The origin of the spiral may be positioned relative to the workpiece whereby to reduce radial acceleration of the intersection. Thus, parts of the spiral closest to its origin may be omitted from the curvilinear path so as to make the peak acceleration (which occurs at the lowest performed radius from the origin, if the speed of execution is constant) arbitrarily low.

As noted above, the invention is particularly applicable to laser SEE sensitivity mapping. Thus the reference axis may be the propagation axis of a laser or other directed energy beam.

The laser may be a pulsed laser of constant pulse repetition frequency.

Preferably the spacing along the spiral of successive points in or on the workpiece illuminated by the laser pulses and the radial spacing of successive turns of the spiral about its origin are such as to produce an array of such points which is evenly distributed at constant density per unit scanned area of the workpiece. This can be achieved by making the spacing of said points along the spiral equal to the radial spacing of successive turns of the spiral about its origin.

Particularly but not exclusively for laser SEE sensitivity mapping, the invention provides a method of investigating an integrated circuit (IC) comprising disposing the IC as the workpiece in the method set forth above, exposing the IC to the laser pulses, and determining the effect on the IC of said pulses.

The method may comprise investigating the disposition of memory cells or other elements of the IC by exposing a said element at a point in or on the IC to a laser pulse so as to change the state thereof, and identifying the element from the change of state. Thus it is possible to associate a logical memory address with a physical location on the IC.

A preferred method comprises investigating the IC by exposing selected said points to laser pulses during at least two traverses of the curvilinear path, the laser power level being constant during each traverse, the power level during the second and subsequent traverses being different to (and preferably greater than) that during a previous traverse.

In another aspect the invention provides apparatus for relatively positioning a workpiece and a reference axis comprising x-wise displacement means and y-wise displacement means for effecting relative displacements of the workpiece and the reference axis along orthogonal axes, and control means configured to operate the displacement means, so that in operation an intersection of the reference axis with the workpiece is moved at constant speed along a curvilinear path.

The displacement means may comprise a piezoelectric transducer.

There may be a strain gauge sensor or other displacement sensing means arranged to provide feedback of the movement of said intersection to the control means.

In a further aspect the invention provides a computer readable medium having recorded thereon a computer program which when installed and operated performs the method set forth above.

An embodiment of the invention will now be described merely by way of example with reference to the accompanying drawings, where:

Figure 1 shows a conventional scanning pattern used in laser SEE sensitivity scanning of a microchip;

Figure 2 shows apparatus according to the invention;

Figure 3 shows a scanning pattern according to the invention; and.

Figure 4 illustrates points on an IC scanned using the invention.

This embodiment of the invention employs a combination of piezo-electric x-y positioning with a curvilinear scanning pattern to achieve the delivery of evenly-distributed arrays of laser pulses to a target area such as a microchip, the laser pulse repetition rate being constant. The embodiment simultaneously seeks to minimize accelerations of the positioning system, so as to minimize induced vibrations in the mount in order to be able to reproduce exactly super-imposable arrays of laser pulses at different laser pulse energies. The overall objective is rapidly to produce maps of laser pulse energy thresholds for upsets/failures induced in the target (e.g. memory bits in the IC flipped from a 1 to a 0 or vice versa).

Digital electronic equipment in satellites and high-flying aircraft is vulnerable to ionising particle radiation. The impact of a high energy particle on a cell of an integrated circuit can produce a temporary or permanent change in that cell, termed a single event effect (SEE) or single event upset (SEU). The mapping of SEE sensitivity at the cell level in memory devices and other integrated circuits can provide important in sights into the vulnerability of the device to such effects. The derangement of a single cell by a SEE will introduce a single bit error. This generally can be overcome by error correction techniques, but compensating for the corruption of two bits in the same word is more difficult. This may occur as a result of a single irradiation event, if, for example, the memory cells storing bits from the same word are physically adjacent on the microchip die. Thus it is useful to know the physical location of each memory cell in the device, as well as its address, so that the cells can be utilised in a manner such that the bits of the same word are not stored in cells which are relatively near to each other or so that the appropriate level of error correction may be implemented in software, if it is impossible to avoid such adjacency. Alternatively, the results obtained with this invention can facilitate a decision to discard one microchip design in favour of a more SEE-tolerant design with an equivalent function from a different supplier.

SEE sensitivity mapping is undertaken by using laser pulses to simulate the incident ionising radiation events at a multiplicity of points on the microchip. Conventionally, the SEE thresholds are established by varying the laser pulse energy on a point by point basis. This is very time consuming.

In this described embodiment of the invention, an array of points on the microchip are instead exposed to a rapidly-delivered scan of laser pulses at a fixed energy level. The scan of the same points is then repeated at a somewhat higher fixed energy level and then again at successively further increased energy levels, as necessary. Each time the cells at some of the points suffer a SEU i.e. they change state, and their identity can be established by interrogating the chip after each laser pulse.

The technique is dependent for its success on the laser pulses being applied sufficiently accurately each time to the same points of the microchip. The stepper-motor positioning systems conventionally employed in SEE mapping cannot achieve this, and so we have devised an alternative solution.

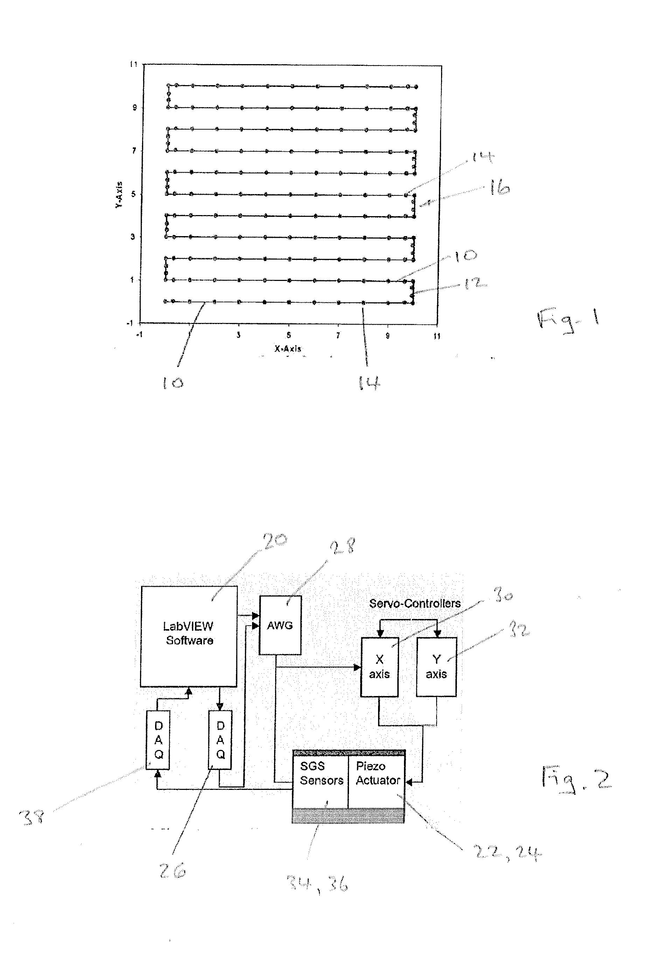

Stepper motor positioning systems are constrained by a finite step size and cumulative positioning errors. Each move has distinct phases of acceleration followed by fixed velocity followed by deceleration. In general a raster scanning pattern such as shown in Figure 1 is used. This consists of extended parallel rows 10 in one direction (here along the x-axis) with a short orthogonal step 12 at the end of the row to index the raster in the y-direction. Points on the microchip illuminated by a laser pulsing at a constant rate are shown at 14. Because of the sharp decelerations and accelerations at the ends of each x-wise row, and the relatively/low speed of traverse in the y direction, the points exposed to the laser pulses are densely clustered at the end of each row as at 16.

The accelerations and decelerations tend to induce vibrations in the mount on which the microchip is positioned, which limits the accuracy with which each laser spot can be positioned.

Figure 2 shows an apparatus according to the invention. A microchip (not shown) is mounted on a platform which is approximately positioned relative to a pulsed laser source (not shown) by x and y stepper motors (not shown) as know per se. The platform is further accurately positionable relative to the stepper motors by x and y piezo actuators 22, 24. Those actuators are of the type known per se in positioning a target for scanning electron microscopy.

The system is controlled by a computer 20 running LabVIEW® or another virtual instrumentation program. The computer instructs a waveform generator 28 via a digital to analog converter 26 to produce respective waveforms for driving the x-axis and y-axis axis piezo-electric actuators 22, 24 via servo controllers 30, 32. The outputs of the servo controllers are continuous DC (analog) voltages, which are proportional to the displacements required of the piezo-electric actuators. Strain gauge sensors 34, 36 provide feedback of the platform position to the computer 20 via analog-to-digital converter 38.

Because the x and y displacements produced by the piezo-electric actuators 22, 34 are continuous and proportional to their driving voltages, curvilinear motion of the platform and hence the microchip may be produced by causing the computer 20 to supply appropriate waveform instructions to the waveform generate 20.

In order to achieve the requisite positioning accuracy and repeatability, it is desirable to minimise the vibrations induced in the positioning system assembly incorporating the microchip mounting platform. Since the natural resonant frequencies for this assembly are expected to be much greater (of order kHz) than the scanning frequencies (<100Hz) used in delivering pulse arrays, the peak vibration/reverberation energy may be anticipated to be induced during the peaks of acceleration (positive or negative) of this assembly (i.e. there is no direct excitation of the resonances). Therefore we have devised a curvilinear scanning pattern which gives low magnitudes for the accelerations in the form of a spiral trajectory. In fact the peak acceleration can be made arbitrarily low by starting the scanning pattern at larger radius from the centre of the spiral, since the acceleration decreases as the radius of curvature increases. In such a case, the origin of the spiral may be offset from the microchip so as to be located some distance beyond its edge, with the result that only part of each turn of the spiral passes over the surface of the chip. The laser source can be gated so that it only produces pulses when it is passing over the chip.

Further parameters which define the exact form of the trajectory are:

1. The speed of travel of the laser spot, which is normally constant (i.e. such that the intersection of the laser pulse locations is evenly spaced along the path).

2. The radial separation between each revolution of the spiral about its origin is set equal to the spacing of laser pulses along the trajectory to achieve an overall even spread of pulse locations.

The equations for the x and y components of this trajectory may therefore be defined in terms of the time parameter t as follows:

$$x = A\sqrt{t}Cos(\omega\sqrt{t}) \text{ and } y = A\sqrt{t}\sin(\omega\sqrt{t})$$

These give a constant trajectory speed around the spiral, where A and w are fitting parameters to scale the spiral array appropriately in a given application. Since the speed v is the product of the radius A√t with the rate of change (derivative with respect to time) of the angle ω√t, we can write:

$$v = \frac{A\omega}{2}$$

The change in radius per revolution is that Δr such that:

$$\Delta r = 2\pi A / \omega$$

Given that the distance between pulses along the trajectory should be similar to Δr in order to given an even spread of pulses, the time $\Delta t_p$ between pulses is given by:

$$v\Delta t_p = \Delta r = \frac{2\pi A}{\omega}$$

On substituting for v,

$$\Delta t_p = \frac{4\pi}{\omega^2}$$

Hence w is defined by the laser pulsing rate. To define A in terms of the maximum radius of the array $R_{max}$, we can use

$$R_{max}^2 = x_{max}^2 + y_{max}^2$$

Hence:

$$t_{max} = \left(R_{max} / A\right)^2$$

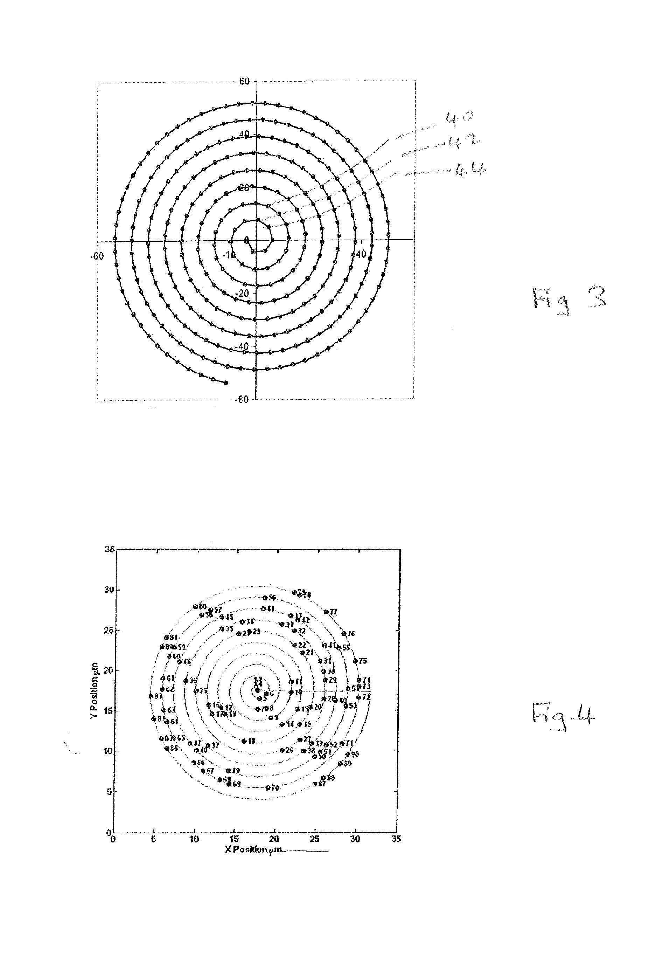

For the example array shown in Fig 3, A=1 and ω=1 with $t_{max}$=3000s and $\Delta t_p$=10s.

It can be seen that the laser spots tend to lie in a repeating pattern of outwardly-extending curved lines, e.g. as at 40, 42, 44. It is necessary to read the monitored set of memory bits on the chip at least once in the period between successive laser pulses. Since the laser pulse repetition rate is about 100Hz, there is insufficient time to read all the memory bits of a substantial (e.g. of order Mbits) memory. However we can reduce this task by perhaps a thousand fold by fixing a subset of the address lines at pre-set values and treating the memory as a smaller sized memory corresponding to the size of the remaining set of address lines. If this were done at random, then the read bits would usually be finely interspersed with a much larger set of unread bits, which would be ineffectual. However, if we have a large scale memory map available for the memory under test (which can itself be generated by laser pulsing the memory IC at a suitable set of locations and examining the addresses of the bits upset at each location), then we can identify the address lines that are known to control large scale positioning on the microchip die and by judiciously choosing the pattern of high and low states to which we pre-set these addresses, we can select small (normally rectangular) patches of adjoining bits. Within these patches the variable address lines are used to create read-cycles addressing the bytes of bits within the patch only. Due to the absence of external address lines to point at individual bits within bytes, it is normally inevitable that some bits of the same bytes will fall outside the patch being read, but this is not a serious constraint upon the general approach. Usually it is possible to read all (or at least a high proportion) of the bits within such a patch.

Figure 4 shows experimentally-observed single event upset (SEU) locations for a delivered spiral array of laser pulses plotted on the scanning path with the corresponding addresses and data being listed in table 1 below. The correct data at each address was hexadecimal 5A, so either bit 4 was flipped to 0 or bit 5 was flipped to 1 by the laser pulses, (i.e. 5A hexadecimal is 01011010 binary, 7A is 01111010 [fifth bit flipped from 0 to 1] and 4A is 01001010 [fourth bit flipped from 1 to 0]). The pulsed sub-region of the memory was read at a frequency of 40Hz with a laser pulsing rate of 10Hz; hence errors could be attributed to individual laser pulses. We have delivered such spiral arrays at a range of laser pulse energies, such that it is possible to derive upset threshold pulse energies across the investigated region of the device.

It can be seen that in this example (and as is generally the case) that the sensitivity to SEUs tends to be non-uniform across the microchip die. Knowledge of such patterns of sensitivity enables steps to be taken to reduce the possibility of bits of the same word being stored at locations which may suffer a SEU from the same ionising radiation event.

The invention includes any novel feature or combination of features herein disclosed, whether or not specifically claimed. The abstract as filed is repeated here as part of the specification.

A method of relatively positioning a workpiece and a reference axis comprising effecting relative displacements of the workpiece and the reference axis along orthogonal axes so that an intersection of the reference axis with the workpiece is moved at substantially constant speed along a curvilinear path. The method is particularly applicable to SEE sensitivity mapping of a microchip memory using a pulsed laser, relative to the axis of which the chip is moved in a spiral path.

TABLE I. ERROR ADDRESSES FOR THE LASER PULSING SPIRAL

| No | Address | Error | No | Address | Error | No | Address | Error |
|---|---|---|---|---|---|---|---|---|
| 1 | 00C799 | 7A | 31 | 00C159 | 7A | 61 | 00DE99 | 7A |

(continued)

| No | Address | Error | No | Address | Error | No | Address | Error |
|----|---------|-------|----|---------|-------|----|---------|-------|
| 2 | 00C399 | 7A | 32 | 00C059 | 7A | 62 | 00DC99 | 7A |
| 3 | 00C399 | 7A | 33 | 000159 | 7A | 63 | 00D719 | 7A |
| 4 | 00C059 | 7A | 34 | 000A59 | 7A | 64 | 00D719 | 7A |
| 5 | 00CB99 | 7A | 35 | 000859 | 7A | 65 | 00D319 | 7A |
| 6 | 00C999 | 7A | 36 | 000699 | 7A | 66 | 00C919 | 7A |
| 7 | 00C059 | 7A | 37 | 00C319 | 7A | 67 | 00C119 | 7A |
| 8 | 00C459 | 7A | 38 | 00ED99 | 4A | 68 | 00FD19 | 4A |
| 9 | 00FC59 | 4A | 39 | 00EF99 | 4A | 69 | 00F919 | 4A |
| 10 | 00C65 | 7A | 40 | 00F259 | 4A | 70 | 00F319 | 4A |
| 11 | 00CA59 | 7A | 41 | 00C359 | 7A | 71 | 00E799 | 4A |
| 12 | 00C299 | 7A | 42 | 00CB59 | 7A | 72 | 00EA59 | 4A |
| 13 | 00FE99 | 4A | 43 | 00CF59 | 7A | 73 | 00EE59 | 4A |
| 14 | 00F859 | 4A | 44 | 000559 | 7A | 74 | 00ED59 | 4A |
| 15 | 00FE59 | 4A | 45 | 000E59 | 7A | 75 | 00F359 | 4A |
| 16 | 00C499 | 7A | 46 | 000099 | 7A | 76 | 00FC09 | 4A |
| 17 | 00C099 | 7A | 47 | 00CB19 | 7A | 77 | 00COD9 | 7A |
| 18 | 00FA99 | 4A | 48 | 00C519 | 7A | 78 | 00C8D | 7A |
| 19 | 00F459 | 4A | 49 | 00F819 | 4A | 79 | 00CC09 | 7A |
| 20 | 00FA59 | 4A | 50 | 00ED99 | 4A | 80 | 00E259 | 7A |
| 21 | 00C559 | 7A | 51 | 00E999 | 4A | 81 | 00E799 | 7A |
| 22 | 00C959 | 7A | 52 | 00EB99 | 4A | 82 | 00E59 | 7A |
| 23 | 000459 | 7A | 53 | 00EE59 | 4A | 83 | 00E099 | 7A |
| 24 | 000459 | 7A | 54 | 00F259 | 4A | 84 | 00D819 | 7A |
| 25 | 00CC99 | 7A | 55 | 00FB59 | 4A | 85 | 00D519 | 7A |
| 26 | 00F199 | 4A | 56 | 000759 | 7A | 86 | 00D119 | 7A |
| 27 | 00F399 | 4A | 57 | 00E259 | 7A | 87 | 00E899 | 4A |
| 28 | 00F659 | 4A | 58 | 00E059 | 7A | 88 | 00E499 | 4A |
| 29 | 00FD59 | 4A | 59 | 00E399 | 7A | 89 | 00E599 | 4A |
| 30 | 00FD59 | 4A | 60 | 00E199 | 7A | 90 | 00E199 | 4A |

**Claims**

1. A method of relatively positioning a workpiece and a reference axis comprising effecting relative displacements of the workpiece and the reference axis along orthogonal axes so that an intersection of the reference axis with the workpiece is moved at substantially constant speed along a curvilinear path.

2. The method of claim 1 wherein the displacements along the axes are effectively continuous.

3. The method of claim 1 or claim 2 wherein the curvilinear path is a spiral.

4. The method of claim 3 wherein the change in radius per revolution between successive turns of the spiral is constant.

5. The method of claim 3 or claim 4, wherein the origin of the spiral is offset relative to the workpiece whereby to reduce radial acceleration of said intersection.

6. The method of any preceding claim wherein the reference axis is the propagation axis of a laser or other directed-energy beam.

7. The method of claim 6 wherein the laser is a pulsed laser of constant pulse repetition frequency.

8. The method of claim 6 or claim 7 when dependent from claim 3 wherein the spacing along the spiral of successive points in or on the workpiece illuminated by the laser pulses and the radial spacing of successive turns of the spiral about its origin are such that the distribution of the points over the scanned area of the workpiece is uniform.

9. A method of investigating an integrated circuit (IC) comprising disposing the IC as the workpiece in the method of claim 6 or any claim dependent therefrom, exposing the IC to the laser pulses, and determining the effect on the IC of said pulses.

10. The method of claim 9 comprising investigating the disposition of memory cells or other elements of the IC by exposing a said element at a point in or on the IC to a laser pulse so as to change the state thereof, and identifying the element from the change of state.

11. The method of claim 9 or 10 comprising investigating the IC by exposing selected said points to laser pulses during at least two traverses of the curvilinear path, the laser power level being constant during each traverse, the power level during the second and subsequent traverses being different to (and preferably greater than) that during a previous traverse.

12. Apparatus for relatively positioning a workpiece and a reference axis comprising x-wise displacement means and y-wise displacement means for effecting relative displacements of the workpiece and the reference axis along orthogonal axes and control means configured to operate the displacement means so that in operation an intersection of the reference axis with the workpiece is moved at constant speed along a curvilinear path.

13. The apparatus of claim 11 or claim 12 comprising a strain gauge sensor or other displacement sensing means arranged to provide feedback of the movement of said intersection to the control means.

14. The apparatus of claim 12 or claim 13 being configured to operate the method of any of claims 1 to 11.

15. A computer readable medium having recorded thereon a computer program which when installed and operated performs the method of any of claims 1 to 11.

Fig. 1

Fig. 2

Fig 3

Fig.4

Europäisches
Patentamt

European
Patent Office

Office européen
des brevets

# EUROPEAN SEARCH REPORT

Application Number

EP 11 27 5045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/238435 A1 (BOCKELMAN DANIEL RICHARD [US] ET AL) 2 October 2008 (2008-10-02) * paragraphs [0005], [0013] - [0025] * ----- | 1-3, 6-11,15 | INV. G05B19/41 G05B19/418 G01R31/308 |
| X | US 6 535 781 B1 (TSUTSUMI TOSHIAKI [JP]) 18 March 2003 (2003-03-18) * column 1, lines 15-61 * * column 4, lines 13-20,43-54 * ----- | 1-4,6,9, 15 | |
| X | US 2009/024241 A1 (RICE MICHAEL R [US] ET AL) 22 January 2009 (2009-01-22) * paragraphs [0020], [0025] - [0030], [0034] * ----- | 1,3,6, 12-15 | |
| X | EP 1 868 054 A1 (VIGEL SPA [IT]) 19 December 2007 (2007-12-19) * paragraphs [0013] - [0022], [0026] * ----- | 1-5, 12-15 | |
| X | US 4 128 968 A (JONES ROBERT A) 12 December 1978 (1978-12-12) * column 3, line 30 - column 4, line 11 * * column 7, line 11 - column 8, line 35 * ----- | 1-4, 12-15 | TECHNICAL FIELDS SEARCHED (IPC) G05B G01R |
| X | US 4 704 688 A (KAMATA JUNICHI [JP]) 3 November 1987 (1987-11-03) * column 1, line 1 - column 3, line 40 * ----- | 1-4, 12-15 | |
| A | US 5 043 589 A (SMEDT RODNEY [US] ET AL) 27 August 1991 (1991-08-27) * column 3, line 37 - column 5, line 3 * * column 8, line 62 - line 68 * ----- | 1-15 | |
| A | WO 01/69205 A1 (SCHLUMBERGER TECHNOLOGIES INC [US]; LO WILLIAM K [US]) 20 September 2001 (2001-09-20) * page 6, line 10 - page 11, line 25 * ----- | 1-15 | |

The present search report has been drawn up for all claims

| Place of search | Date of completion of the search | Examiner |
|---|---|---|
| The Hague | 29 September 2011 | Prokopiou, Platon |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 11 27 5045

This annex lists the patent family members relating to the patent documents cited in  the above-mentioned European search report.
The members are as contained in the European Patent Office EDP file on
The European Patent Office is in no way liable for these particulars which are merely given for the purpose of information.

29-09-2011

| Patent document cited in search report | | Publication date | Patent family member(s) | | Publication date |
|---|---|---|---|---|---|
| US 2008238435 | A1 | 02-10-2008 | NONE | | |
| US 6535781 | B1 | 18-03-2003 | JP | 3071418 B1 | 31-07-2000 |
| | | | JP | 2000222575 A | 11-08-2000 |
| US 2009024241 | A1 | 22-01-2009 | WO | 2009014647 A1 | 29-01-2009 |
| EP 1868054 | A1 | 19-12-2007 | ES | 2345116 T3 | 15-09-2010 |
| | | | US | 2007292227 A1 | 20-12-2007 |
| US 4128968 | A | 12-12-1978 | DE | 2742307 A1 | 23-03-1978 |
| | | | FR | 2365409 A1 | 21-04-1978 |
| | | | GB | 1560434 A | 06-02-1980 |
| | | | JP | 1545828 C | 28-02-1990 |
| | | | JP | 53039593 A | 11-04-1978 |
| | | | JP | 63027148 B | 01-06-1988 |
| US 4704688 | A | 03-11-1987 | DE | 3521072 A1 | 12-12-1985 |
| US 5043589 | A | 27-08-1991 | NONE | | |
| WO 0169205 | A1 | 20-09-2001 | AU | 5171701 A | 24-09-2001 |
| | | | EP | 1266204 A1 | 18-12-2002 |
| | | | JP | 2003527597 A | 16-09-2003 |
| | | | TW | 498155 B | 11-08-2002 |
| | | | US | 6462814 B1 | 08-10-2002 |

EPO FORM P0459

For more details about this annex : see Official Journal of the European Patent Office, No. 12/82